(19) Europäisches Patentamt
European Patent Office
Office européen des brevets

(11) **EP 3 995 526 A1**

(12) **EUROPEAN PATENT APPLICATION**
published in accordance with Art. 153(4) EPC

(43) Date of publication:
**11.05.2022 Bulletin 2022/19**

(21) Application number: **20834798.9**

(22) Date of filing: **03.07.2020**

(51) International Patent Classification (IPC):
*C08G 63/02* (2006.01)      *C08G 63/183* (2006.01)
*C08J 11/04* (2006.01)      *C08J 11/06* (2006.01)
*C08K 3/34* (2006.01)      *C08K 5/19* (2006.01)
*C08K 9/00* (2006.01)      *C08L 67/02* (2006.01)

(52) Cooperative Patent Classification (CPC):
**C08G 63/02; C08G 63/183; C08J 3/22;**
**C08J 11/04; C08J 11/06; C08K 3/34; C08K 5/19;**
**C08K 9/00; C08L 67/02;** Y02P 20/143; Y02W 30/62

(86) International application number:
**PCT/CL2020/050070**

(87) International publication number:
**WO 2021/000058 (07.01.2021 Gazette 2021/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **03.07.2019   CL 20191845**

(71) Applicant: **Universidad De Santiago De Chile**
**Estacion Central**
**Santiago, 7560873 (CL)**

(72) Inventors:
• **LOPEZ DE DICASTILLO BERGAMO, Ana Carolina**
  **Santiago, 7560873 (CL)**
• **VELÁSQUEZ VELÁSQUEZ, Eliezer José**
  **Santiago, 7560873 (CL)**
• **GARRIDO AYALA, Luan Ayelen**
  **Santiago, 7560873 (CL)**
• **GUARDA MORAGA, Abel**
  **Santiago, 7560873 (CL)**
• **GALOTTO LOPEZ, Maria José**
  **Santiago, 7560873 (CL)**

(74) Representative: **Pons**
**Glorieta Rubén Darío 4**
**28010 Madrid (ES)**

(54) **POLYMER NANOCOMPOSITE COMPRISING A MELT MIXTURE OF VIRGIN PET AND RECYCLED PET WITH CLAY; METHOD FOR PREPARING THE NANOCOMPOSITE; AND USE THEREOF IN THE MANUFACTURE OF MOULDABLE OBJECTS OR FILMS, INCLUDING PACKAGES, CONTAINERS AND FIBRES, AMONG OTHERS**

(57)    The present invention relates to: polymer nanocomposites, and more particularly, to polymer nanocomposites comprising a melting blend of virgin PET (vPET), post-consumer recycled PET (RPET) and nanoclay; a method for preparing the polymer nanocomposite or polymer nanocomposite composition; and the use thereof in the manufacture of mouldable objects or films, including packages, containers, fibers, among others.

EP 3 995 526 A1

**Description**

**FIELD OF THE INVENTION**

The present invention is related to a polymer nanocomposite, and more particularly, to a polymer nanocomposite comprising a melting mixture of virgin PET (vPET), post-consumer recycled PET and nanoclays; method for preparing said polymer nanocomposite or polymer nanocomposite composition; and its use in the manufacture of films or molded articles including packages, containers, fibers, among others.

**BACKGROUND**

Extrusion is a type of polymer process broadly used at industrial level and, the preparation of high viscosity nanocomposites from the incorporation of nanoparticles, avoiding the use of solvents to be finally removed, is allowed.

RPET mainly has poor mechanical properties due to the damage caused by thermomechanical cycles and the polymer process. The dispersion of rigid clay nanoparticles into a PET matrix causes a change in the energy dissipation mechanism, which can result in an improvement in the elasticity module and the tensile strength when a force is applied, depending on the grade of intercalation of polymer chains between clay sheet, clay structure and concentration, polymer molar mass distribution, among others. Nanoclays are normally chemically modified to improve the miscibility with polymer matrixes. This organic modifier acting as surfactant and promoting an intercalation of PET between clay sheets, which is fundamental to the reinforcing function to be made by clay.

Among patent documents, it is possible to mention USNo.6.734.234 B1 (Phoenix Technologies International LLC) related to a procedure to prepare a RPET mixture with an additive having as purpose of adding aggregate value to the material, and subsequently facilitating a homogeneous mixture with another polymer, between them, vPET is included.

On the other hand, patent USNo.6.653.388B1 (South Carolina Foundation, University of South Carolina Research Foundation) is related to preparing a nanocomposite from a melting mixture of a thermostable polymer as PET for example and a clay mixture, process for obtaining the same and manufactured articles from this material, including films. Articles manufactured with nanocomposite show gas barrier properties after added up to 25% clay, and films are obtained by melting compression of PET/clay precursor *pellets.* It is important to note that a mixture comprising at least two clays in a solvent to be subsequently volatized, is used.

USNo.9.676.926 B2 (Ecole Polytechnique of Montreal) is related to preparing a nanocomposite by extrusion, only using vPET and chain extensors, in some cases, using specifically canolite - an inorganically modified non-smectite clay, at too high concentrations, mainly within a range between from 2% to 5% wt.

US 2010/0113673 A1 (Industrial Technology Research Institute) is related to a method for manufacturing a polyester nanocomposite by melting wherein an amorphous polyester is prepared by a polymerization procedure, specifically PETG, to be mixed with one or more organically modified clays and at a lower temperature in the range of extrusion, between from 170 to 240°C. Thus, an amorphous material with barrier and transparence properties is obtained.

US2010113626A1 (Invista North America SARL) is related to a composition comprising colored recycled poly(ethylene terephthalate) (RPET) and an opacifying material, and it can further comprise virgin poly(ethylene terephthalate) (PET), a high gas barrier or a compound to eliminate oxygen. Such opacifying material comprises at least a member selected from a group consisting on: i) metal powder, ii) aluminum, titanium, zinc, tin, zirconium and silicon metal oxides; iii) silica, iv) smoked silica, v) smoked alumina, vi) aluminum and calcium metal silicates; vii) calcium, barium, zinc and magnesium carbonates; viii) calcium, barium, zinc and magnesium sulfides; ix) calcium, barium, zinc and magnesium sulfates; x) clays, xi) nanoclays, xii) mica, xiii) opaque recycled poly(ethylene terephthalate), and xiv) mixtures thereof; and the same is present in a concentration about of 0.1% to about of 5% wt. Such colored RPET is present in a concentration of at least about of 10% wt. Such metal powder comprising at least a member selected from the group consisting of aluminum, copper, iron, zinc, tin and mixtures thereof. Also, it comprises articles produced from the composition and method of preparation. The method of preparation comprising: a) clean granular scales, colored and opaques without classifying, b) introducing such granulated scales in a molding machine by injection to melt such scales and c) molding by injection such melt scales in a preform; polymerizing the same - after of such granulation, such granules under solid state increases the viscosity and such step introducing pelletized scales also includes introducing an additional opacifying material into the molding machine by injection.

The present invention allows an increase of the RPET incorporation in the preparations of films or molded articles, preferably, packages of several uses, with mechanical properties (Young module, tensile strength and rupture elongation) similar to those elaborated with vPET, being constituted as the main component of the vPET/RPET mixture and without significantly affecting the transparence and thermal properties without demanding compatible additives and positively impacting the environment due to an increase of the use of recycled materials.

## BREIF DESCRIPTION OF THE INVENTION

It is known that clay is useful in preparing polymer nanocomposites, which in turn are useful in the manufacture of films and molded articles including sheets, bottles and packages, in general, having mechanical properties similar to those elaborated with vPET, for example, packages/containers to protect the degradation and/or contamination of products for human consumption such as food products, drinks and medicines.

The present invention also looking for using recycling materials to produce polymer nanocomposites and articles comprising the same, having mechanical properties similar to merely polymer packages/containers.

According with one aspect of the present invention as described herein, the invention is related to a clay polymer nanocomposite comprising a polymer mixture of vPET and RPET at a ratio of 20:80 containing clay.

In other embodiment, this invention is related with a process for preparing a clay polymer nanocomposite as described above.

Even in other embodiment, this invention is related to a process for preparing a package or container comprising the clay polymer nanocomposite described above.

Additional advantages of the present invention are stated below in this description and examples to allow its reproduction but not limiting the scope of the protection as claimed in the claim set.

Particularly, the present invention is related to a clay polymer nanocomposite comprising a melting mixture of virgin PET (vPET) and post-consumer bottle recycled PET (RPET) with a ratio vPET: RPET 20:80 (1:4), respectively, and no more than 5% wt clay based on the total weight of the nanocomposite (vPET + RPET + clay) (wt/wt), preferably, no more than 3% wt, and even more preferably, at the most 1% wt, and particularly, 1% wt clay; method of preparation of said polymer nanocomposite or polymer nanocomposite composition; and its use in the manufacture of films or molded articles including packages, containers, fibers, among others, using said nanocomposite; and said films or molded articles.

The present clay preferably is an organoclay selected from natural montmorillonite modified with a 30% wt ammonium quaternary salt, ammonium methyl-T-bis-hydroxyethyl chloride wherein T = tallow (app. 65%C18, app. 30%C16, app. 5%C14).

The present film of the invention has mechanical properties which are similar to a film 100% (wt/wt) virgin PET, which involves Young module, tensile strength and rupture elongation. The present film of the invention is obtained by extrusion of a mixture of vPET with a high proportion of RPET and a low clay concentration. The pellet mixture of vPET, RPET scales and clay must be homogenized before adding to a hopper. The extrusion must be made with a temperature profile preferably from 265 to 275°C and a speed to the extruder screw preferably of 135 rpm.

## BRIEF DESCRIPTION OF THE DRAWINGS

FIGURE 1. Illustrating Young Module for nanocomposite and controls.

FIGURE 2. Illustrating Tensile strength of nanocomposite and controls.

FIGURE 3. Illustrating rupture elongation and number of cases with oscillation of strength to nanocomposite and controls.

FIGURE 4. Illustrating deformation strength curves to typical RPET test tube with or without strength oscillations (SO).

FIGURE 5. Photography of a universal machine during a tension test to a RPET test tube for several samples before submitted to a traction assay (a), several test tubes (b) and at positions of thickness measurement (c).

FIGURE 6. Illustrating photography of nanocomposite films and controls.

FIGURE 7. Illustrating Young Module of nanocomposites with several RPET % and controls. The last four columns X-Y correspond to nanocomposites with a mass ratio "X" RPET and nanofiller "Y" % wt.

FIGURE 8. Illustrating tensile strength of nanocomposites with several RPET % and controls. The last four columns X-Y correspond to nanocomposites with a mass ratio "X" RPET and nanofiller "Y" % wt.

FIGURE 9. Illustrating a rupture elongation and number of cases with strength oscillation of nanocomposites with several RPET % and controls. The last four columns X-Y correspond to nanocomposites with a mass ratio "X" RPET and nanofiller "Y" % wt.

## DETAILED DESCRIPTION OF THE INVENTION

The present invention can be easier understood after follows the detailed description of the present invention and examples provided herein. However, the invention is not limited to specific processes and conditions as described below. In addition, the terminology used herein with descriptive purposes can not be understood as limiting the scope of the invention.

Definitions

Terms as used along to the description or claims of the present application should be understood as stated below while no mention is made on contrary:
"clay" should be understood as a natural clay, synthetic clay, modified natural clay, modified synthetic clay or a mixture of two or more of the same. Preferably, clay is selected from a modified natural clay, preferably said modified natural clay is selected from an organoclay, and even more preferably said organoclay is selected from modified natural montmorillonite having a 30% wt ammonium quaternary salt, ammonium methyl-T-bis-2-hydroxyethyl chloride, wherein T = tallow (app. 65%C18, app. 30%C16, app. 5%C14). Preferably, clay having an average particle size $\leq$ 50 $\mu$m, preferably $\leq$ 13 $\mu$m, and even more preferably 6 $\mu$m. Preferably, clay having an apparent density within the rage of 0.2283-0.3638 g/cm$^3$.
"Nanocomposite(s)" or "nanocomposite(s) composition(s)" should be understood as a polymer or copolymer having dispersed an extruded mixture of vPET and RPET containing clay.
"C14" corresponding to a lineal or branched hydrocarbon chain comprising 14 carbons.
"C16" corresponding to a lineal or branched hydrocarbon chain comprising 16 carbons.
"C18" corresponding to a lineal or branched hydrocarbon chain comprising 18 carbons.
The present invention is related to polymer nanocomposites, and more particularly, to polymer nanocomposites comprising a polymer matrix comprising an extruded mixture of virgin PET (vPET), post-consumer recycled PET (RPET) and nanoclay and composition of such nanocomposite; method for preparing such polymer nanocomposite or polymer nanocomposite composition; and its use in the manufacture of films or molded articles including packages, containers, fibers, among others, using such nanocomposite; and such films and molded articles.
In an embodiment, the method of preparing such polymer composition having clay comprising preparing a mixture of vPET and RPET containing clay at a ratio of 20:80 by extrusion. The polymer mixture of VPET y RPET containing clay is prepared by fusion of polymers and clay, and to obtain the polymer nanocomposite. The mixture is extruded either by an extruder allowing handling a high viscosity of the polymer nanocomposite and avoiding the use of solvents to prepare the nanocomposite which would be hard to technically and costly removing.
A range of extruding temperature to obtain the film is 255-285°C. Preferably, such range of temperature, in this step, is 265-275°C. In addition, the extrusion is performed preferably by a double screw extruder. The screw speed is adjusted to a range from 100 to 140 rpm. Preferably, the screw speed is 135 rpm to achieve a 55% torque. Preferably, the roller speed at the nozzle outcome is 2.7 y 1.6 m/min to the big and small roller, respectively.
The present nanocomposites of the invention comprising at the most or no more than 5%, 3% or 1% wt clay. Preferably, the nanocomposites of the present invention comprising 1% wt clay.
A clay useful includes synthetic or modified natural clays. Natural clays include smectite including montmorillonite, hectorite, mica, vermiculite, bentonite, nontronite, beidellite, volkonskoite, saponite, magadite, kenyaite and the like. Synthetic clays include synthetic mica, synthetic saponite, synthetic hectorite and the like. Modified clays include organomontmorillonite, fluorinated montmorillonite, fluorinated mica and the like. Modified clays can be modified in a percent range from 10 to 30, preferably with 30% ammonium quaternary salt, ammonium methyl T-bis-2-hydroxyethyl chloride, T = tallow (app. 65%C18, app. 30%C16, app. 5%C14).
Preferred clay is smectite, particularly, bentonite or montmorillonite. Even more particular, such clay is modified natural montmorillonite with a 30% wt ammonium quaternary salt, ammonium methyl-T-bis-2-hydroxyethyl chloride, wherein T is formed by about of 65% wt C18, about of 30% wt C16 and about of 5% wt C14.
Clays of this invention can comprise non modified clays, modified clays and mixtures thereof. Many treatments to modify clay for improving its dispersion into a polymer are known and it can be used to practice the present invention.
Prior to incorporating a vPET/RPET mixture, the clay particle size is reduced by methods well known in the art including but not limited to, grinding, pulverization, pearl grinding, hammer grinding and its combinations. A reduced particle size to at least 50 microns of diameter, is preferred, lower 13 microns are more preferred, and 6 microns of diameter are even more preferred.
If preferred, an agent improving the clay dispersion into the polymer can be added during or before the nanocomposite formation by melting mixture. Many of such agents are known, comprising a wide range of materials including water, alcohols, ketones, aldehydes, chlorinated solvents, hydrocarbonated solvents, aromatic solvents, surfactants, chain extensors and the like or a combination thereof.
If preferred, vPET and RPET can also include additive normally used in polymers. Such additives known in the art are colorants, pigments, black carbon, glass fiber, fillers, impact modifies, antioxidants, stabilizers, flame retardant, aiding agents in overheating, aiding agents in crystallization, compounds reducing acetaldehyde, aiding agents in releasing of recycling, oxygen scavangers, plasticizers, nucleants, mold releasing agents, compatibilizers, and the like or its combinations. All these additives and many others and its use are known in the art and no extended description is required. Then, only a limited number will be referred being understood that any of these compounds can be used in any combination as either the same does not avoid the reproduction nor the performance of the invention.

RPET material preferably is selected from post-consumer RPET scales. More preferably RPET material is selected from post-consumer RPET bottle scales without or with a blue or green scale part.

Molded articles of the present invention can be mono or multilayer articles prepared with the present nanocomposite of the invention, including but without be limited to, films, sheets, pipeline, profiles, preforms, films and containers molded by blowing, films and containers molded by injection blowing, films and containers molded by extrusion blowing and thermoformed articles and the like. Containers are preferably bottles.

Bottles and containers of the present invention have the same general properties, particularly the same mechanical properties than bottles and contained fabricated only with vPET.

Molded articles of the present invention comprise articles approved to be in contact with foods, wherein the nanocomposite can or can not be found at the layer of the article being in contact with the food.

Even in other embodiment, the clay polymer nanocomposite of the present invention as well the molded article or extruded sheet can be simultaneously formed by co-injection or coextrusion molding. The extruded article or sheet can be formed by extrusion of the homogenized mixture of the added components to the hopper (polymers + clays) or from a *masterbatch* or *pellet* containing nanoreinforcement.

Thus, the present invention allows the obtention of films increasing the use of RPET and the manufacture of packages with mechanical properties similar to those fabricated with vPET 100% wt without losing the transparence neither with significant changes in the thermic properties. It is observed a remarked damage of the mechanical properties of a package prepared with high RPET concentrations, mainly, at concentrations higher 60% wt.

Particularly, the present invention is related to a clay polymer nanocomposite comprising a melting mixture of virgin PET (vPET) and post-consumer bottle recycled PET (RPET) at a ratio vPET to RPET 20:80 (1:4), respectively, and 1% wt organoclay; film comprising said clay polymer nanocomposite, method of preparation of said nanocomposite; and a method of preparation of film, package or container comprising said nanocomposite. Organoclay preferably is selected of natural modified montmorillonite at 30% wt ammonium quaternary salt, ammonium methyl-T-bis-2-hydroxyethyl chloride, wherein T = tallow (app. 65%C18, app. 30%C16, app. 5%C14). The present film of the invention having mechanical properties similar to a film of material 100% wt virgin PET. The present film of the invention is obtained by extrusion of the mixture of vPET having a high RPET content and a low clay content. The mixture of *pellets* comprising vPET, RPET scales and clay should be homogenized before being added to a hopper. Extrusion must be made with a temperature profile of 265 to 275°C and screw speed of 135 rpm.

Below, specific examples of the method for preparing nanocomposites from a mixture of virgin PET (vPET) and recycled PET (RPET) vPET/RPET at a ratio 20:80 incorporating 1% wt modified montmorillonite nanoclay having 30% wt of ammonium quaternary salt as reinforcement agent.

Example 1: Preparation of vPET/RPET-NC nanocomposite film

To obtain the present nanocomposite comprised by a mixture of vPET and RPET 20: 80 (1:4) having modified organic nanoclay (NC) selected from modified natural montmorillonite having a 30% wt of ammonium quaternary salt, ammonium methyl-T-bis-2-hydroxyethyl chloride, wherein T = tallow (~65%C18, ~30%C16, ~5%C14), as organic modified as surfactant improving the miscibility and promoting the intercalation of poly(ethylene terephthalate) (vPET and RPET) polymer chains among clay sheets. Specifically, it is used commercial clay Cloisite 30B. vPET *pellets* (intrinsic viscosity = 0.80 ± 0.020) are used. RPET corresponds to uncolored post-consumer bottle RPET scales with a very low content of blue and green scales. Clay as used has an apparent density 0.2283-0.3638 g/cm$^3$ and an average particle size $\leq$ 13 $\mu$m. The mixture comprises 80% wt (m/m) RPET based on the total polymer weight and 1% wt clay based on the total (polymer + clay) nanocomposite mass. The mixture of these three components is performed in an extruder hopper, and the mixed of components is intensified along to the process of melting mixing, action made by the double screws after applying temperature by the heaters of the extruder's body, along to the extrusion process to finally obtain a single film.

The film is prepared via extrusion from the mixture vPET/RPET 20:80 with the incorporation of 1% wt of organoclay based on the total polymer mass. Previously, the clay drying was performed in vacuum at 40°C for 24 hours. RPET and vPET are dried in a stove at 100°C for 24 hours. The physical mixture of vPET and RPET *pellets* and powder clay is homogenized before to be added to the extruder's hopper.

The extrusion temperature profile to obtain a film was 265-275°C. A double screw extruder LabTech Scientific L TS-20-32 (Bangkok, Thailand) with a screw's diameter of 20 mm having a relation L/D 40:1, was used. The screw speed was adjusted to 135 rpm to exert a 55% torque. The roller speed at the nozzle's outcome was 2.7 and 1.6 m/min to the big and small roller, respectively. The average film thickness was 102 ± 22 μm.

Example 2: Mechanical properties of the polymer nanocomposite film

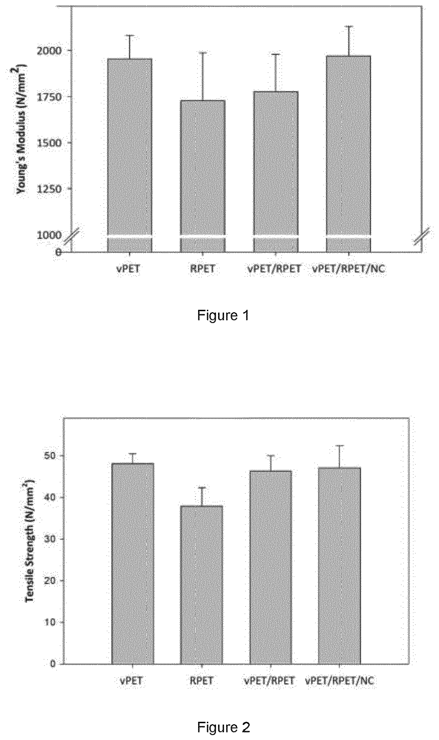

Figures 1-3 illustrate a Young module as rigidity measurement, tensile strength as maximum force that the material can support before an irreversible deformation and elongation rupture percent as ductility measurement, respectively. The films analyzed were vPET (100% virgin material); RPET (100% recycled material); vPET/RPET (mixture 20/80, virgin PET/recycled PET), and vPET/RPET/NC (mixture 20/80, virgin PET/ recycled PET having 1% wt clay based on the total nanocomposite mass), all prepared as the general procedure of Example 1.

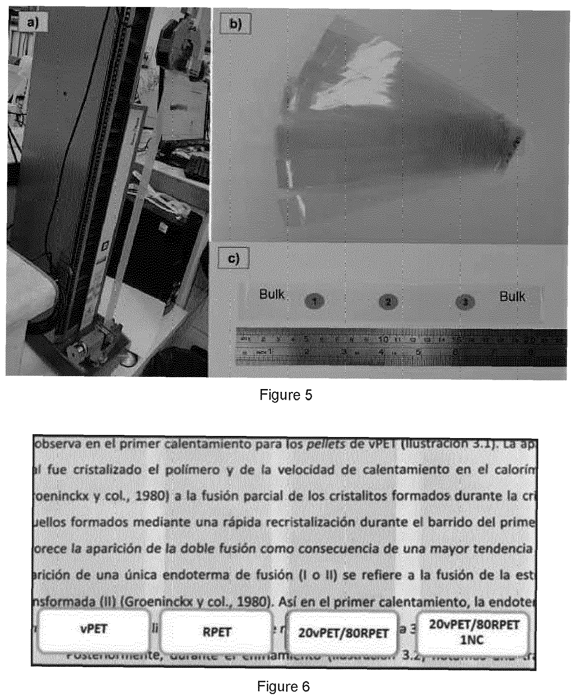

Extrusion conditions of the films were adjusted in accordance with the material density and the same are showed in Table 1. The thickness film was calculated as the average thickness of 20 test tubes which were cut from the film (Figure 5). The thickness of a test tube was calculated as the average of the thickness measurements made in three points of the test tube's zone submitted to tension (as showed in Figure 5), using a Digimatic Mitutoyo (modelo ID-C112, Kawasaki, Japan) micrometer.

Table 1. Films obtained by extrusion and process conditions.

| Film | Screw speed (rpm) | Torque (%) | Thickness (μm) |
|---|---|---|---|
| vPET | 30 | 45 | 125 ± 7 |
| RPET | 140 | 55 | 100 ± 9 |
| vPET/RPET 20:80 | 115 | 55 | 94 ± 10 |
| 20VPET/80RPET NC | 135 | 55 | 107 ± 22 |

A traction analysis was made at room temperature in a universal machine Zwick Roell (model BDO-FB 0.5 TH, Ulm, Germany) in accordance with ASTM D882-09 norm. The dimensions of the test tubes were 21 cm x 2.5 cm. The distances between jaws were 12.5 cm and a jaw separation speed was 12.5 mm/min having an increase of 100 mm/min when a fall of 5% of the maximum force fell. Before this analysis, films were conditioned at 23°C ± 2°C by a period of 48 h inside a desiccator with a relative humidity of 50% ± 10%. The results are reported as the average of 20 replicas to each film. In Figure 5 is showed a photography of the universal machine during the traction assay of a PET test tube, specifically in a case wherein a high ductility by effort oscillation occurred.

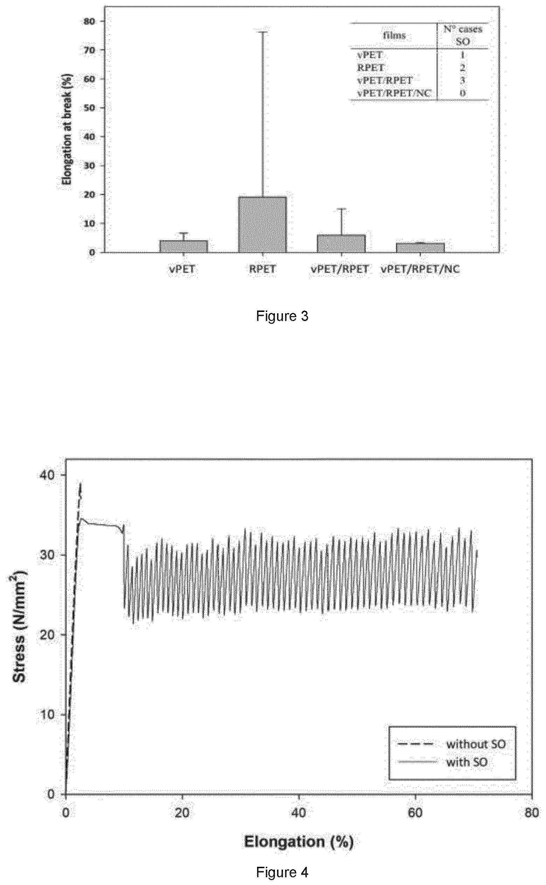

After compared controls without clays, it was observed a clear tendency of reducing the Young module and the tensile resistance of the material with the RPET proportion (Figures 1 and 2). Further, it was observed a tendency to increase the number of cases with effort oscillations (SO, by its English acronym) and the elongation in the average rupture during the traction assay with the use of RPET (Figure 3). Without adhering to any theory, it is estimated that this phenomenon could be mainly explained by an unstable mechanism for the transference of heat during the propagation of the test tube neck (Bazhenov, S. Self-oscillatory neck propagation in polymers. J. Appl. Polym. Sci., 119, 654-661). However, the vPET/RPET/NC film from a nanocomposite with 1% clay prepared as this invention and having mechanical parameters similar to a film prepared only with vPET. These results reveal - without adhering with any theory, that the use of clay inhibits the efforts oscillations due to a possible reduction in the polymer mobility as its intercalation between clay sheets and its dispersion in the polymer matrix and blocking the plastic deformation up to high elongations of PET. Based on this, the vPET/RPET/NC film prepared as this invention would facilitate the proper cutting of the film during the thermoformed, which is affected by the increase of the ductility of the extruded films using a high RPET proportion. In Figure 5 is showed, as an illustration way, the effortsdeformation curves for typical RPET cases with or without efforts oscillations. It should be remarked the high standard deviation to the elongation measurement in the RPET rupture, which could be occurred by the SO phenomenon in the most numbers of the test tubes.

Example 3: Thermal and Optical Properties

To confirm the transparence (opacity index, color) and thermal parameters as glass transition temperature, melting temperature, and maximum degradation temperature of the film prepared with the present mixture vPET/RPET with clay is compared against films prepared only with vPET.

Thermal Properties

The main thermal parameters were determined in a screening differential calorimeter DSC Mettler-Toledo model STAR 822e (Greinfensee, Switzerland) coupled to a cooling unity (HAAKE EK 90/mt, Newtington, USA). The weight of each sample was about of 6-8 mg. The simples were submitted to a heating from 25°C to 300°C, a constant speed of 10°C/min under a nitrogen atmosphere.

The reported parameters were the glass transition temperature ($T_g$), fusion temperature ($T_m$), crystallization temperature ($T_c$), in cold-crystallization temperature ($T_{cc}$), fusion enthalpy ($\Delta H_m$) and crystallization enthalpy ($\Delta H_{cc}$) and the crystalline fraction percent as each particular case.

The crystallinity was calculated from Equation 1, related to the value of fusion enthalpy ($\Delta H_m$) of the sample and theorical PET fusion enthalpy with 100% crystallinity ($\Delta H_{100}$ = 135.98 J/g).

$$X_c = (\Delta H_m - \Delta H_{cc})/(\Delta H_{100} \times X_{PET}) * 100 \ (\%) \qquad \text{(Equation 1)}$$

wherein:

$X_c$: crystalline fraction content (%)
$\Delta H_m$: fusion enthalpy of the sample (J/g)
$\Delta H_{cc}$: in cold-crystallinization enthalpy (J/g)
$\Delta H_{100}$: fusion enthalpy of totally PET crystalline (J/g)
$X_{PET}$: fraction of PET in the film (%)

In Table 2 DSC parameters of a 20vPET/80RPET/NC prototype and controls without clays to comparative effects are reported. No relevant differences between the glass transition temperatures of materials are present while a tendency to increase crystallinity is observed after the incorporation of RPET. This could be explained, without adhering to any theory, to the shorter RPET chains can act as nucleation agents contributing to the ordering. By the other side, the clay can similarly produce a nucleant effect. However, the crystallinity of the nanocomposite is similar to the corresponding control 20vPET/80RPET. The resulting changes of the thermal parameters are low in magnitude and then the same does not affect the use of application of the material compared to vPET.

Table 2 DSC parameters of the first heating of the nanocomposite and controls

| Films | Tg (°C) | $T_{cc}$ (°C) | $\Delta H_{cc}$ (J/g) | $T_m$ (°C) | $\Delta H_m$ (J/g) | $X_c$ (%) |
|---|---|---|---|---|---|---|
| vPET | 70.6 ± 0.4 | 121.6 ± 0.6 | 26.4 ± 1.7 | 245.4 ± 1.1 | 40.5 ± 0.2 | 10.3 ± 0.9 |
| RPET | 72.4 ± 1.5 | 125.0 ± 1.3 | 25.3 ± 0.1 | 250.8 ± 0.4 | 41.0 ± 2.2 | 11.6 ± 1.7 |
| 20vPET/80RPET | 72.9 ± 0.6 | 125.2 ± 0.5 | 24.7 ± 0.5 | 251.6 ± 0.3 | 43.2 ± 0.1 | 13.6 ± 0.4 |
| 20vPET/80RPET/NC | 72.9 ± 0.4 | 125.2 ± 1.0 | 26.5 ± 1.1 | 251.7 ± 1.7 | 47.2 ± 1.0 | 15.3 ± 0.1 |
| Each value represents the mean of 2 replicas with its respective standard deviation. | | | | | | |

The thermal stability of the vPET/RPET/NC nanocomposite was evaluated by a TGA analysis in a Mettler Toledo Gas Controller GC2 Stare System TGA/DSC equipment. Between 5 to 6 mg of each sample was deposited in porcelain capsules, which were submitted to a screening temperature from 30 to 800°C at a heating speed of 10°C/min under nitrogen atmosphere conditions.

The loss kinetic of matter is determined by a releasing or volatile generation speed between the initial temperature of mass loss ($T_{onset}$) and maximum degradation temperature ($T_d$), which can be expressed as the quotient between the percent of mass loss split by the difference of temperature $\Delta T$ within said range used the following Equation 2:

$$\text{Releasing Speed} = (\% \text{ mass loss at } T_d - \% \text{ mass loss at } T_{onset})/(T_d - T_{onset}) \qquad \text{(Equation 2)}$$

In Table 3 the initial temperature of decomposition is registered ($T_{onset}$), at 5%, 10% and 50% of loss of weight and maximum degradation speed ($T_d$). These parameters were similar to all the controls without clay. The loss of mass in the nanocomposite was present at a $T_{onset}$ lower the corresponding control without clay, however, the temperature of the maximum degradation velocity is similar to the one of vPET. The faster initial decomposition of the nanocomposite can be attributed to the degradation of the ammonium modifier of clay, which occurs by the mechanism of Hoffman elimination (Stoeffler, K., Lafleur, P. G., Denault, J., 2008. Thermal decomposition of various alkyl oniumorganoclays: Effect on polyethylene terephthalate nanocomposites' properties. Polym. Degrad. Stab. 93, 1332-1350). Further, the releasing speed of volatile resulted being slower the nanocomposite prepared to this invention compared to controls due to the presence of clay, evidenced a barrier function exercising by the silicate lamellas before the volatile molecules resulting of the PET thermal degradation (Table 3). The releasing speed of volatile was similar to the controls. The barrier effect of silicate in the nanocomposite has been reported by Chang, J. H., Seo, B. S., Hwang, D. H., 2002. An exfoliation of organoclay in thermotropic liquid crystalline polyester nanocomposites. Polymer, 43, 2969-2974 y 4Fornes, T. D., Yoon, P. J., Hunter, D. L., Keskkula, H., Paul, D. R., 2002. Effect of organoclay structure on nylon 6 nanocomposite morphology and properties. Polymer. 43, 5915-5933.

Table 3. TGA parameters of nanocomposites and controls.

| film | $T_{onset}$ | Temperature (°C) | | | $T_d$ (°C) | Releasing speed of volatile (% wt/°C) |
|---|---|---|---|---|---|---|
| | | $T_s$ | $T_{10}$ | $T_{50}$ | | |
| vPET | 401.9 | 408.6 | 416.7 | 443.1 | 441.4 | 1.11 |
| RPET | 400.1 | 407.3 | 416.3 | 442.9 | 440.5 | 1.06 |
| 20vPET/80RPET | 401.4 | 408.4 | 417.0 | 443.5 | 441.2 | 1.08 |
| 20vPET/80RPET/NC | 392.4 | 402.8 | 413.2 | 443.1 | 441.0 | 0.90 |

$T_{onset}$ corresponds to a loss mass fraction of 2.5% under the criteria of Wang, Y., Gao, J., Ma, Y., Agarwal, U. S., 2006. Study on mechanical properties, thermal stability and crystallization behavior of PET/MMT nanocomposites. Compos. Part B: Eng. 37, 399-407.

Optical Properties

The color change ($\triangle E$) produced by the RPET and organoclay incorporation in the vPET/RPET film of the invention compared to the vPET film, was determined by a CR-410 Minolta chroma-meter colorimeter using a CIELab scale. Luminosity (L*) and chromaticity (a* y b*) parameters were measured by six replicas to nanocomposite and controls. A standard white color bottom plate (L* = 97,78; a* = -0,02 y b* = 1,89) was used, with an iluminante D65 and a 2° observer. The difference of color between the sample and vPET was calculated by the equation of Bodart, M., Peñaranda, R., Deneyer, A., Flamant, G., 2008. Photometry and colorimetry characterisation of materials in day lighting evaluation tools. Build. Environ. 43, 2046-2058 (Equatio 3).

$$\triangle E = [(\triangle L^*)^2 + (\triangle a^*)^2 + (\triangle b^*)^2]^{1/2} \qquad \text{(Equation 3)}$$

L* provides a luminosity measurement of the simples and its values from 0 to 100, which designate the transition from black color to white color Values a* and b* are the chromaticity coordinates, wherein +a* is the red direction, -a* is the green direction, +b* is the yellow direction and -b* is la the direction forward blues.

On the other side, the opacity index of nanocomposite and control were measured. Six replicas of each film having dimensions 1 cm x 4 cm were analyzed. Absorbence was measured with a UV-vis mini 1240 (Spectroquant® Pharo 300, Darmastadt, Germany) spectrometer at a wavelength of 600 nm. Opacity index was calculated as the quotient between absorbence divided by the film thickness (mm), as Gómez-Estaca J, Montero P, Fernández-Martín F, Alemán A, Gómez-Guillén MC., 2009. Physical and chemical properties of tuna-skin and bovine-hide gelatin films with added aqueous oregano and rosemary extracts. Food Hydrocoll. 23, 1334-1341.

A higher RPET concentration in the film causes a higher color deviation with respect to vPET (Table 4). On the other hand, the presence of clay caused an increase of $\triangle E$ to the film compared to the 20vPET/80RPET control. This could be mainly explained due to the parameter b* trends to positive values, yellow tonalities, a* no significant trends to negative values, green tonalities, and L* decreased with a nanofiller presence. However, the nanocomposite film did not show a significant transparence with respect to vPET and 20vPET/80RPET (vPET/RPT 20:80) control film. This is evident due to a slight change in the RPET and/or clay opacity indexes (Table 4). Further, in Figure 6 is showed a photography of the films located at a random bottom to facilitate contrasts and appreciating the differences of transparence.

Table 4 Coordinates of CIELab color, color change and opacity index of the films.

| Film | L* | a* | b* | $\triangle E^*$ (vPET) | Opacity |
|---|---|---|---|---|---|
| vPET | 98.68 ± 0.24 | 0.02 ± 0.24 | 1.90 ± 0.0 | - | 0.39 ± 0.24 |

(continued)

| Film | L* | a* | b* | ΔE* (vPET) | Opacity |
|---|---|---|---|---|---|
| RPET | 97.75 ± 0.12 | -0.11 ± 0.24 | 2.63 ± 0.12 | 0.93 ± 0.13 | 0.47 ± 0.24 |
| 20vPET/80RPET | 97.79 ± 0.14 | -0.10 ± 0.24 | 2.50 ± 0.08 | 0.81 ± 0.09 | 0.56 ± 0.24 |
| 20vPET/80RPET/NC | 97.11 ± 0.27 | -0.13 ± 0.24 | 3.31 ± 0.24 | 1.85 ± 0.34 | 0.59 ± 0.24 |
| Each value represents a means of 6 replicas with its respective standard deviation. ΔE* is color change measured in relation to vPET. | | | | | |

Example 4: Comparison of the mechanical properties of a prototype with vPET/RPET/clay films.

A mechanical characterization of the films prepared by extrusion with different mass vPET/RPET ratios and different clay concentrations were made to confirm the improvement of the mechanical parameters up to similar values to the virgin material when used the formulation 20vPET/80RPET (vPET/RPET, 80:20) having 1% wt of commercial nanofillers (20vPET/80RPET/NC).

Films were extruded following the same methodology of example 1. A 55% torque was made per extrusion and the thickness of the film was about of 100 $\mu$m. Further, the methodology to the traction assay was as describe in example 2.

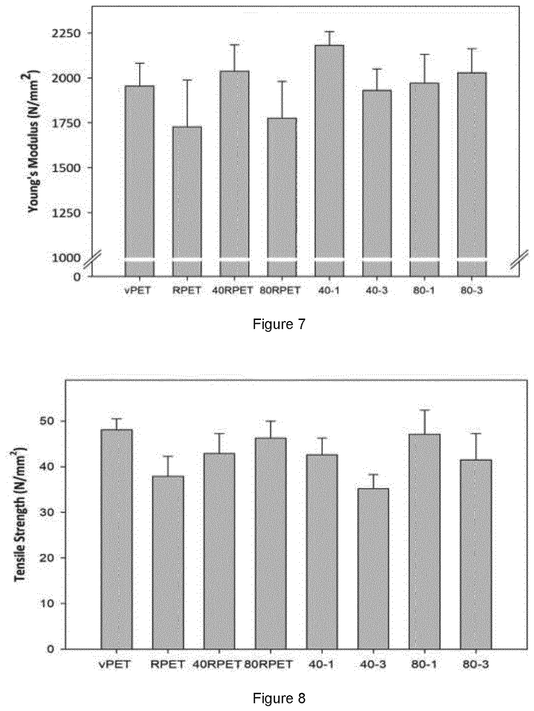

In Figures 7-9, the Young module as rigidity measurement, the tensile strength as maximum force supporting the material before an irreversible deformation and the percent of elongation in the rupture as ductility measurement are respectively showed. The comparison was made between the properties of films prepared from vPET (100% virgin material); RPET (100% recycled material); virgin PET/recycled PET (vPET/RPET: mixtures 60/40 and 20/80), mixtures virgin PET/recycled PET/nanoclay: 60vPET/40RPET/NC (mixture 60/40 of virgin PET/recycled PET) having 1% wt clay and 3% wt clay and 20vPET/80RPET/NC (mixture 20/80, virgin PET/recycled PET) having 1% wt clay and 3% wt clay.

After compared the nanocomposites with the respective controls without clay (Figures 7 and 8), only to those of the present invention prepared with a mass ratio of 20:80 vPET/RPET and 1% wt nanofiller (20vPET/80RPET/NC), an increase was obtained either to elastic module or tensile strength up to values similar to the virgin material.

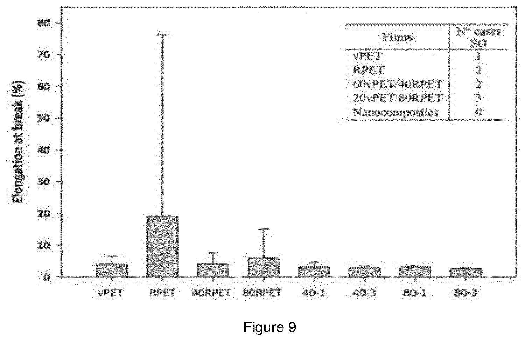

Further, once nanocomposites from the PET mixtures had no increase in ductility by the effect of efforts oscillations with respect to controls (Figure 9) due to the reasons exposed in example 3. However, the nancocomposite 20vPET/80RPET/NC comprising 1% wt clay further reducing the trends to the occurrence of strength oscillations, was the only one in achieving the improvement of all the properties up to vPET values, elastic module, tensile strength and rupture elongation as a transparence similar to vPET without significant changes of color and thermal properties.

**Claims**

**1.** Polymer Nanocomposite **CHARACTERIZED in that** they comprise a polymer matrix of a melting mixture of virgin PET (vPET), recycled PET (RPET) and clay, wherein the mixing ratio vPET to RPET is 20:80, and said clay is present in a percent no more than 5% wt with respect to the total weight of the nanocomposite.

**2.** The polymer nanocomposite of claim 1 **CHARACTERIZED in that** said clay is present in a percent no mor 3% wt with respect to the total weight of the nanocomposite.

**3.** The polymer nanocomposite of claim 1 **CHARACTERIZED in that** said clay is present in a percent no more 1% wt with respect to the total weight of the nanocomposite.

**4.** The polymer nanocomposite of claim 1 **CHARACTERIZED in that** said clay is present in a percent of 1% wt with respect to the total weight of the nanocomposite.

**5.** The polymer nanocomposite of claim 1 **CHARACTERIZED in that** said clay has an average particle size ≤ 50 $\mu$m.

**6.** The polymer nanocomposite of claim 5 **CHARACTERIZED in that** said clay has an average particle size ≤ 50 $\mu$m.

**7.** The polymer nanocomposite of claim 6 **CHARACTERIZED in that** said clay has an average particle size of 6 $\mu$m.

**8.** The polymer nanocomposite of claim 1 **CHARACTERIZED in that** said clay having an apparent density in the range from 0,2283-0,3638 g/cm$^3$.

**9.** The polymer nanocomposite of claim 1 **CHARACTERIZED in that** said clay is selected from natural clay, synthetic clay, modified natural clay or modified synthetic clay.

**10.** The polymer nanocomposite of claim 9 **CHARACTERIZED in that** said natural clay natural is selected from montmorillonite, hectorite, mica, vermiculite, bentonite, nontronite, beidellite, volkonskoite, saponite, magadite or kenyaite.

**11.** The polymer nanocomposite of claim 9 **CHARACTERIZED in that** said synthetic clay is selected from synthetic mica, synthetic saponite or synthetic hectorite.

**12.** The polymer nanocomposite of claim 9 **CHARACTERIZED in that** said modified natural clay is selected from organomontmorillonite, fluorinated montmorillonite or fluoriated mica.

**13.** The polymer nanocomposite of claim 12 **CHARACTERIZED in that** said organomontmorillonite is selected from modified organomontmorillonite in a percent range from 10 to 30% wt of ammonium quaternary salt.

**14.** The polymer nanocomposite of claim 13 **CHARACTERIZED in that** said organomontmorillonite is selected from a modified organomontmorillonite in a percent of 30% wt of ammonium quaternary salt.

**15.** The polymer nanocomposite of claim 13 **CHARACTERIZED in that** said modified organomontmorillonite is selected from organomontmorillonite modified with ammonium methyl T-bis-2-hydroxyethyl chloride, being T = tallow (~65%C18, ~30%C16, ~5%C14).

**16.** The polymer nanocomposite of claim 15 **CHARACTERIZED in that** it further comprises an aiding agent improving the dispersion of clay in polymers.

**17.** The polymer nanocomposite of claim 16 **CHARACTERIZED in that** said aiding agent improving the dispersion of clay in polymers include water, alcohols, ketones, aldehydes, chlorinated solvents, hydrocarbon solvents, aromatic solvents, surfactants, chain extensors or a combination of two or more thereof.

**18.** The polymer nanocomposite of claim 17 **CHARACTERIZED in that** it further comprises additives used in polymers selected from colorants, pigments, black carbon, glass fiber, rellenos, impact modifiers, antioxidants, stabilizes, flame retardants, reheating aiding agents, crystallization aiding agents, compound reducing acetaldehyde, recycling-releasing aiding agents, oxygen scavangers, plasticizers, nucleants, molding-releasing agents, compatibilizers, or a combination of two or more thereof.

**19.** Method for preparing said nanocomposite **CHARACTERIZED in that** it comprises preparing a melting mixture of vPET, RPET and clay, wherein the ratio vPET:RPET is 20:80, and said mixing is performed at a melting temperature from 255 to 285oC, under agitation to homogenizing the mixture.

**20.** The method of claim 19 **CHARACTERIZED in that** said RPET is post-consumer RPET scales.

**21.** The method of claim 20 **CHARACTERIZED in that** said RPET is post-consumer RPET scales is selected from uncolored post-consumer bottle RPET or colored post-consumer bottle RPET having blue and green scales.

**22.** The method of claim 20 **CHARACTERIZED in that** said vPET is pellet vPET.

**23.** The method of claim 19 **CHARACTERIZED in that** said clay having an average particle size $\leq$ 50 $\mu$m.

**24.** The method of claim 23 **CHARACTERIZED in that** said clay having an average particle size $\leq$ 13 $\mu$m.

**25.** The method of claim 23 **CHARACTERIZED in that** said clay having an average particle size of 6 $\mu$m.

**26.** The method of claim 23 **CHARACTERIZED in that** said clay having an apparent density within the range from 0,2283-0,3638 g/cm$^3$.

**27.** The method of claim 19 **CHARACTERIZED in that** said melting temperature is within the range from 265-275$^{\circ}$C.

**20.** The method of claim 19 **CHARACTERIZED in that** it further comprises adding during or before the preparation of said mixture of vPET, RPET and clay, an aiding agent improving the dispersion of said clay in polymers including said aiding agent improving the dispersion of clay in polymers include water, alcohols, ketones, aldehydes, chlorinated solvents, hydrocarbon solvents, aromatic solvents, surfactants, chain extensors or a combination of two or more thereof.

**29.** The method of claim 19 **CHARACTERIZED in that** it further comprises adding during or before the preparation of said mixture of vPET, RPET and clay, additives to polymers selected from selected from colorants, pigments, black carbon, glass fiber, rellenos, impact modifiers, antioxidants, stabilizes, flame retardants, reheating aiding agents, crystallization aiding agents, compound reducing acetaldehyde, recycling-releasing aiding agents, oxygen scavangers, plasticizers, nucleants, molding-releasing agents, compatibilizers, or a combination of two or more thereof.

**30.** The method of claim 19 **CHARACTERIZED in that** it further comprises reducing the particle size of said clay up to achieve an average particle size $\leq$ 50 microns.

**31.** The method of claim 30 **CHARACTERIZED in that** it further comprises reducing the particle size of said clay up to achieve an average particle size $\leq$ 13 microns.

**32.** The method of claim 30 **CHARACTERIZED in that** it further comprises reducing the particle size of said clay up to achieve an average particle size of 6 microns.

**33.** The method of anyone of claims 30 to 32 **CHARACTERIZED in that** said reduction of particle size include grinding, pulverization, pearl grinding or hammer grinding of said clay.

**34.** The method of claim 19 **CHARACTERIZED in that** it further comprises drying said clay at vacuum at 40°C during 24 hours.

**35.** The method of claim 19 **CHARACTERIZED in that** it further comprises drying said RPET and said vPET at 100°C during 24 hours.

**36.** Method for preparing a polymer film **CHARACTERIZED in that** it comprises extruding the nanocomposites of anyone of the claims 1 to 18 at a speed between the range from 100 to 140 rpm.

**37.** The method of claim 36 **CHARACTERIZED in that** said extrusion speed is 135 rpm.

**38.** The method of claim 36 **CHARACTERIZED in that** said extrusion is performed by a screw extruder.

**39.** The method of claim 38 CHARACETRIZED in that said screw extrusion is performed by a double screw extruder.

**40.** Use of nanocomposites of any claims of 1 to 18 **CHARACTERIZED in that** they are useful in the manufacture of films or molded articles including sheet, pipeline, tubes, profiles, preforms, films molded by blowing and containers, containers molded by injection blowing, containers molded by extrusion blowing or thermoformed articles.

**41.** Polymer film **CHARACTERIZED in that** it comprises the nanoparticles of anyone of claims 1 a 18.

**42.** Polymer film **CHARACTERIZED in that** it comprises the manufacturing the method of any one of claims 36 to 39.

Figure 1

Figure 2

Figure 3

Figure 4

Figure 5

Figure 6

Figure 7

Figure 8

Figure 9

## INTERNATIONAL SEARCH REPORT

| | |
|---|---|
| International application No. | |
| | PCT/CL2020/050070 |

**A. CLASSIFICATION OF SUBJECT MATTER**

(CIP): C08G63/02, 63/183, C08J11/04, 11/06, C08K3/34, C08K5/19, C08K9/00, C08L67/02 (2020.01)

According to International Patent Classification (IPC) or to both national classification and IPC

**B. FIELDS SEARCHED**

Minimum documentation searched (classification system followed by classification symbols)

**SEE EXTRA BOX**

Documentation searched other than minimum documentation to the extent that such documents are included in the fields searched

INAPI, ESPACENET, DERWENT INNOVATION, BEIC, PATENTSCOPE, INVENES

Electronic data base consulted during the international search (name of data base and, where practicable, search terms used)

INAPI, ESPACENET, DERWENT INNOVATION, BEIC, PATENTSCOPE, INVENES

**C. DOCUMENTS CONSIDERED TO BE RELEVANT**

| Category* | Citation of document, with indication, where appropriate, of the relevant passages | Relevant to claim No. |
|---|---|---|
| X | VELÁSQUEZ, E, J. et al. Increasing the incorporation of recycled PET on poíymeric blends through the reinforeernent witb comme reial nanoclays. Applied Clay Science 180 (2019) 105185. available online 20 June 2019. doi: 10.1016/j. clay .2019.105185. Abstract, page 1 §2, pág 2 §2, §3, §4. | 1-42 |
| L, A | GARRIDO, L. et ai. Efecto de nanorefuerzo de la organoarcilla Cloisite 30B en diferentes nanocompósitos de poli(tereftalato de etileno). V Congreso Nacional de Nanotecnologia, 25 al 29 de November  de 2018 Pucón, Chile. [Recuperado el 26,08.2020] Retrieved from < https://docplayer.es/H6039896-Presentacion-nanoelectronica-nanomagnetismo-nano-optica-nano-optoelectronica-y-nanofotonica.html>  Page 2G2. | |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 August 2020 | 21 September 2020 |

| Name and mailing address of the ISA/ INAPI Av. Libertador Bernardo O'Higgins 194, Piso 17, Santiago, Chile | Authorized officer |
|---|---|
| Facsimile No. | Telephone No. |

Form PCT/ISA/210 (second sheet) (January 2015)

**INTERNATIONAL SEARCH REPORT**

International application No.

PCT/CL2020/050070

C (Continuation). DOCUMENTS CONSIDERED TO BE RELEVANT

| Category* | Citation of document, with indication, where appropriate, of the relevant passages | Relevant to claim No. |
|---|---|---|
| A | KRÁCALÍK, M. et ai, Recycled PET-Organoclay Nanocomposites with Enhanced Processing Properties and Thermai Stability. Journal of Applied Polymer Science · Vol. 106, 2092-2100, November 2Q07. DOI: 10,10Q2/app.26858. The whole document. | |
| A | HAMZEHLOU, S. H, & KATBAB, A. A, Botile-ío-Bottie Recycling of PET Via Nanostructure Formaíion by Melt íníercalaíion ¡n Twin Screw Compounder: Improved Thermal, Barrier, and Microbíoiogícal Properties. Journal of Applied Polymer Science, Vol. 106, 1375-1382 (2007). DOI: 10.1002/app.26730. The whole document. | |
| A | DE LIMA, J. A. et al. Degradatlon procese of low molar mass poly (etbylene terephtbalate)/ organicaliy modlfied montmoriíloniie nanocomposites: Effect on structure, rbeologicaí, and thermal behavior. Journal of Thermoplasíic Composite Materials 2017, Vol. 30(4) 5Q4-520. DOI: 10.1177/0892705715604678 The whole document. | |
| A | MERIJS MERI, R, et ai. Eiasticüy and iong-term behavior of recycled poiyethylene terephthalate (rPET)/montmorillonite (MMT) cornposites. Composite Structures 111 (2014) 453-458. doi: 10.1016/j.compstruct.2014.01 .017 The whole document. | |
| A | CHEN, R. S. et al. Chara cterization of recycled thermoplastics-based nanocomposites: Polymer-clay compatibility, blending procediste, Processing condition, and ciay contení effects. Cornposites Parí B: Engineering, Volume 131 , 15 December 2017, Pag es 91-99. doi: 10.1016/j,compositesb.2017.07,057 The whole document. | |
| A | KARABULUT, M. Production And Chara cterization Of Nanocomposite Materials From Recycled Thermoplastics. A Thesis Submltted To The Gradúate School Of Natural And Applied Sciences Of The Middle East Technica! University. July 2003. [Retrieved on 26.08.2020] Retrieved from <http://citeseerxjst.psu.edu/viewdoc/downioad? doM 0.1 .1 ,476.3006&rep=rep1 &type=pdí> The whole document. | |
| A | VAZVERDI, E. et ai. Evaíuation of the effect of ciay nanoparticles on mechanicaí properties of recycled poiyethylene. 11 th International Seminar on Poíymer Science and Technology Irán Polymer and Pelrochemicaí Institute, Tehran, irán 6-9 October 2014. [Recuperado el 28.08.2020] Recuperado desde < https://www.researchgate.net/publication/341724787_1_tb_Internat ional_Seminar_on_Polymer_Science_and_Technology_Evaluation _of_the_effect_of_clay_nanoparticles_on_mechanical_properties_ of_recycled_polyethylene> The whole document. | |

Form PCT/ISA/210 (continuation of second sheet) (January 2015)

## INTERNATIONAL SEARCH REPORT

International application No.

PCT/CL2020/050070

(CIP)
C08G63/02, 63/183, C08J11/04, 11/06, C08K3/34, C08K5/19, C08K9/00, C08L67/02 (2020.01)


(CPC)
C08G63/02, 63/183,
C08J3/20, 3/22, 3/23, 2367/00, C08J11/04, 11/06,
C08K3/34, 3/346, C08K5/19, C08K9/00,
C08L67/02, 2201/00, 2201/10, 2205/00, 2205/025, 2666/00, 2666/62,
Y02W30/62, Y02P20/143.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100113673 A1
- US 2010113626 A1

**Non-patent literature cited in the description**

- **BAZHENOV, S.** Self-oscillatory neck propagation in polymers. *J. Appl. Polym. Sci.,* vol. 119, 654-661
- **STOEFFLER, K. ; LAFLEUR, P. G. ; DENAULT, J.** Thermal decomposition of various alkyl oniumorganoclays: Effect on polyethylene terephthalate nanocomposites' properties. *Polym. Degrad. Stab.,* 2008, vol. 93, 1332-1350
- **CHANG, J. H. ; SEO, B. S. ; HWANG, D. H.** An exfoliation of organoclay in thermotropic liquid crystalline polyester nanocomposites. *Polymer,* 2002, vol. 43, 2969-2974
- **FORNES, T. D. ; YOON, P. J. ; HUNTER, D. L. ; KESKKULA, H. ; PAUL, D. R.** Effect of organoclay structure on nylon 6 nanocomposite morphology and properties. *Polymer,* 2002, vol. 43, 5915-5933
- **WANG, Y. ; GAO, J. ; MA, Y. ; AGARWAL, U. S.** Study on mechanical properties, thermal stability and crystallization behavior of PET/MMT nanocomposites. *Compos. Part B: Eng.,* 2006, vol. 37, 399-407
- **BODART, M. ; PEÑARANDA, R. ; DENEYER, A. ; FLAMANT, G.** Photometry and colorimetry characterisation of materials in day lighting evaluation tools. *Build. Environ.,* 2008, vol. 43, 2046-2058
- **GÓMEZ-ESTACA J ; MONTERO P ; FERNÁNDEZ-MARTÍN F ; ALEMÁN A ; GÓMEZ-GUILLÉN MC.** Physical and chemical properties of tuna-skin and bovine-hide gelatin films with added aqueous oregano and rosemary extracts. *Food Hydrocoll,* 2009, vol. 23, 1334-1341